# EUROPÄISCHE PATENTSCHRIFT

(11) **EP 0 511 725 B1**
(45) Veröffentlichungstag und Bekanntmachung des Hinweises auf die Patenterteilung: **28.08.1996**
(21) Anmeldenummer: 92250093.9
(22) Anmeldetag: 23.04.1992
(51) Int. Cl.: B01D 46/04

(54) **Schlauchfilter**
Tube filter
Tuyau filtrant

(30) Priorität: 30.04.1991 DE 4114626
(43) Veröffentlichungstag der Anmeldung: 04.11.1992
(73) Patentinhaber: Van Ackeren, Paul, Dr., W-4100 Duisburg 25 (DE)
(72) Erfinder: Van Ackeren, Paul, Dr., W-4100 Duisburg 25 (DE)
(74) Vertreter: Meissner, Peter E., Dipl.-Ing.

(56) Entgegenhaltungen:
- DE-A- 2 633 773
- DE-A- 2 709 896
- DE-A- 2 712 218
- US-A- 4 231 770

## Beschreibung

Die Erfindung betrifft eine Vorrichtung zum Entfernen von Filterrückständen auf Gewebefiltern. Im Sinne der Anmeldung werden unter dem Begriff "Gewebe" auch Vliese verstanden.

Es ist bekannt, zur Abscheidung trockener Stäube aus Industrieabgasen Gewebefilter zu benutzen, siehe z.B. DE-OS 26 33 773 oder auch "Staubabscheidung mit Schlauchfiltern und Taschenfiltern" von F. Löffler, Vieweg-Verlag, 1984, Seite 236ff. Diese Gewebefilter sind zumeist schlauchförmig ausgebildet und lose über ein Stützgitter gezogen, das sie mit geringem Abstand umgeben. Die Gewebeflächen werden im Regelfall von außen von dem zu reinigenden Rohgas angeströmt, so daß sich auf der Außenfläche ein Filterkuchen aus Staubpartikeln absetzt und das Reingas über das Schlauchinnere abgeführt wird. Zur Gewährleistung der Filterfunktionen muß das Gewebe in kurzen Zeitabständen gereinigt werden. Dies geschieht durch Spannen des Gewebes in Richtung entgegen der Strömungsrichtung des Gases oder senkrecht zur Strömungsrichtung. Am häufigsten geschieht das durch stoßartige Beaufschlagung des Gewebes mittels eines Gases, z. B. Druckluft, das in das Innere des Filterschlauches impulsartig durch eine Düse eingeleitet wird. Nachteilig ist dabei, daß die Reinigungsdruckluft durch das Filtertuch strömt, den Filterkuchen teilweise zerstört und die dabei freiwerdenden Staubpartikel auf benachbarten Filterschläuchen abgeschieden werden. Dieser Effekt verstärkt sich mit zunehmender Schlauchlänge.

Der Erfindung liegt daher das Problem zugrunde, bei der Abreinigung von Gewebefiltern die Zerstörung des Filterkuchens so zu gestalten, daß möglichst wenige Bestandteile des Filterkuchens in den Schwebezustand versetzt, also ein möglichst großer Anteil des Filterkuchens zusammenhängend ausgetragen werden kann.

Bei einer Einrichtung der gattungsgemäßen Art des Patentanspruches 1 wird dieses Problem erfindungsgemäß mit den kennzeichnenden Merkmalen des Anspruches 1 gelöst, Weiterentwicklungen der Erfindung sind in den Unteransprüchen enthalten.

Die Erfindung soll anhand der Zeichnungen näher erläutert werden.

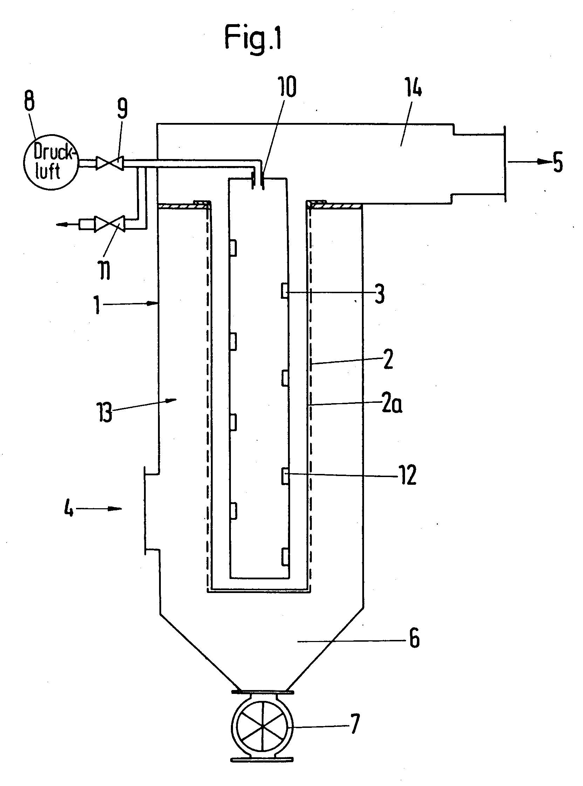

Fig. 1 zeigt die zeichnerische Darstellung eines Ausführungsbeispieles während des Filterbetriebes,
Fig. 2 dieselbe Ausführung während der Abreinigung des Filterschlauches und
Fig. 3 eine Variante der Ausführung nach Fig. 1 und 2.

In einem Gehäuse 1 ist auf einem Stützgitter 2a ein Filterschlauch 2 aufgezogen und so angeordnet, daß sie das Gehäuse 1 in einen Staubraum 13 mit einem Rohgaseintritt 4, Staubbunker 6 und Staubaustragsschleuse 7 sowie in einen Reingasraum 14 mit Reingasaustritt 5 unterteilen. Axial innenliegend ist ein ausdehnbarer Schlauch 3 installiert, der über einen Injektor 10 und ein Membraneinlaßventil 9 mit einer Druckgasquelle 8 (üblicherweise Druckluft) verbunden ist. Der ausdehnbare Schlauch kann als Faltenbalg ausgebildet sein oder aus einem in sich dehnbaren geeigneten Material bestehen.

Anstelle des Injektors 10 in Form einer Düse kann die Druckluft auch durch eine sich über die Länge des Schlauches 3 erstreckende Rohrleitung, die mit mehreren in diesem Bereich sich über den Umfang verteilten Austrittsöffnungen versehen ist, zugeführt werden. Am Schlauch 3 können impulsverstärkende Gewichte 12 angebracht sein. Diese können sowohl gleichmäßig verteilt sein oder auch entsprechend dem Abreinigungsbedarf zur Kompensation eventuell ungleichmäßiger Beaufschlagung des Filterschlauches 2 angeordnet werden. Während des Filterbetriebes ist das Einlaßventil 9 geschlossen und das Auslaßventil 11 geöffnet. Der Rohgasstaub lagert sich auf dem Filterschlauch 2 ab, während das Reingas über den Ringraum, der durch den Filterschlauch 2 und den Schlauch 3 gebildet wird, über den Reingassammelraum 14 mit Reingasaustritt 5 in die Atmosphäre abgeleitet wird.

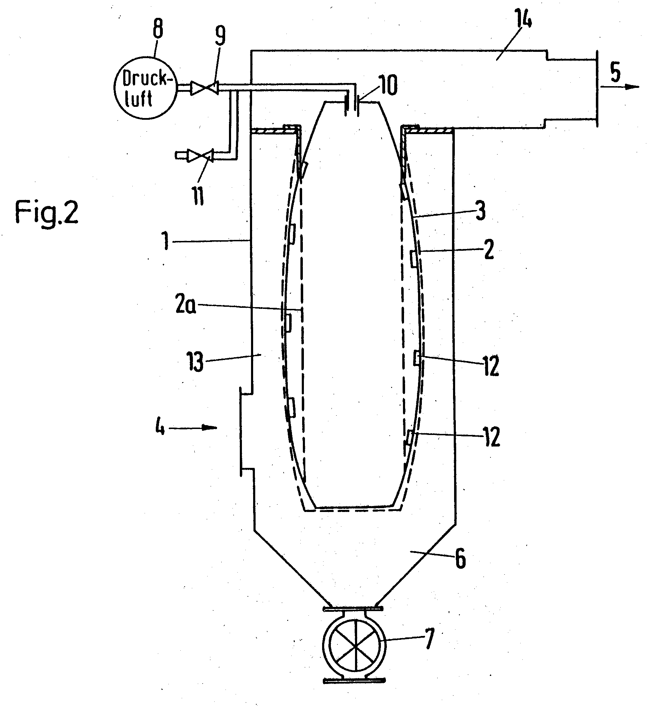

In Fig. 2 ist der Abreinigungszustand dargestellt, der durch Öffnen des Einlaßventils 9 und Schließen des Auslaßventils 11 für sehr kurze Zeit erreicht wird. Der Schlauch 3 dehnt sich aus, drückt dabei das im Ringraum zwischen dem Filterschlauch 2 und dem Schlauch 3 befindliche Gasvolumen durch den Filterschlauch 2 zurück in den Rohgasraum 13 und trifft auf den über das Stützgitter 2a gezogenen Filterschlauch 2. In den Zwischenräumen des Stützgitters 2a wird der Filterschlauch 2 girlandenartig ausgewölbt.

Auf diese Weise wird der auf dem Filterschlauch 2 abgeschiedene Staub abgelöst. Der Staub fällt in den Staubbunker 6 und wird über die Staubschleuse 7 ausgetragen. Da die Ausdehnungsgeschwindigkeit des für die Abreinigung vorgesehenen Schlauches 3 durch entsprechende Wahl von Druck und Menge des Druckgases in weiten Grenzen variiert werden kann, ohne gleichzeitig die den Filterkuchen zerstäubende Druckgasmenge zu erhöhen, die ohne den Schlauch 3 durch den Filterschlauch 2 abfließen würde, kann eine gezielte Anpassung der Abreinigungsbedingungen an die jeweiligen Staubeigenschaften erreicht werden. Dies ist besonders bei sehr feinen Stäuben (0,1 bis 1,0 µm) vorteilhaft, um sogenannte trägerfixierte Schadstoffe abzuscheiden. Grundsätzlich besteht jedoch die Möglichkeit,' den Schlauch 3 selbst beliebig permeabel auszuführen, so daß auch die durch den Filterschlauch 2 durchtretende Gasmenge den jeweiligen Erfordernissen optimal angepaßt werden kann.

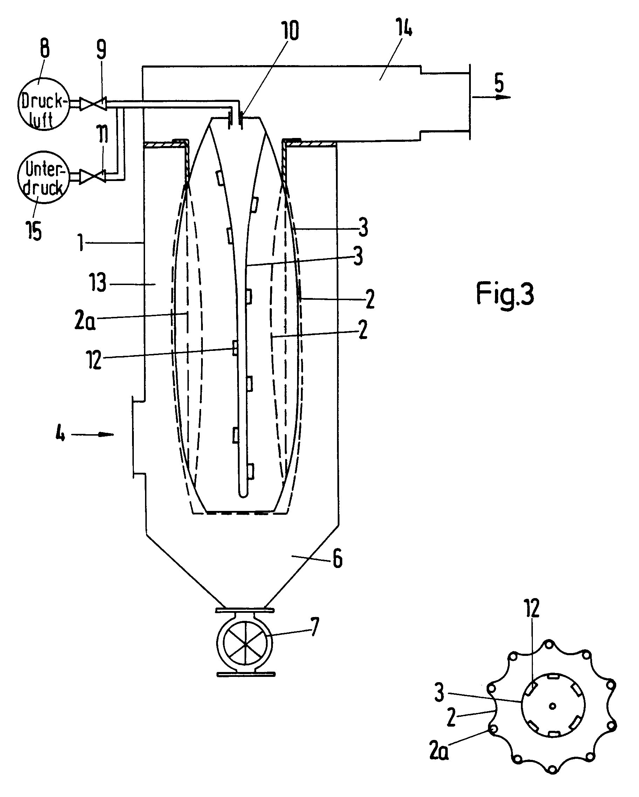

In Fig. 3 ist dargestellt, wie durch Anschluß des Auslaßventils 11 an einen Raum mit Unterdruck 15 (Vakuum) der Schlauch 3 konkav verformt wird und durch den so entstehenden Sog im Ringraum zwischen dem Filterschlauch 2 und dem Schlauch 3 auch den Filterschlauch 2 schlagartig konkav girlandenartig um das Stützgitter gezogen wird. Dieses Vorgehen kann den Abreinigungseffekt verbessern. Es ergibt sich dadurch auch eine Vergrößerung des Ringraumes zwischen dem Filterschlauch 2 und dem Schlauch 3 mit einer entsprechenden Erhöhung des für die Abreinigung bedeutsamen Verdrängungsgasvolumens sowie eine Verlängerung des Ausdehnungsweges des Schlauches 3 zur Vergrößerung des Auftreffimpulses.

Gemäß der Erfindung wird also die Reinigungsluft nicht direkt in den - Filterschlauch stoßartig eingeleitet, sondern in einen vorzugsweise gasundurchlässigen Dehnungsschlauch, der im Innern des Filterschlauches axial angeordnet ist. Wird Druckluft in diesen gasundurchlässigen Schlauch eingeleitet, dehnt sich der Schlauch aus, trifft gegen den Filterschlauch und wölbt ihn aus. Hierdurch wird der Abreinigungseffekt bewirkt. Dieser wird noch unterstützt durch die geringe Menge an Verdrängungsabgas, das sich im Ringraum zwischen den beiden Schläuchen vor Einleitung des Abreinigungsvorganges befindet. Diese Gasmenge reicht auch, um den Filz oder das Gewebe zu reinigen, ist aber zu klein, um den Filterkuchen nachhaltig zu zerstören. Im übrigen läßt sich diese Gasmenge durch gezielte Permeabilität des Dehnungsschlauches erhöhen, wenn dies erforderlich sein sollte.

Da keine oder nur geringe Mengen an Druckluft beim Abreinigungsvorgang verloren gehen, ergibt sich eine sehr heftige Abreinigung, die durch entsprechende Wahl der Druckluftdosierung in weiten Grenzen variiert werden kann. Überdies ist auch die Schlauchlänge nicht kritisch und lediglich vorn Verhältnis Füllvolumen des Dehnungsschlauches zum Druckluftmengenstrom in Relation zur gewünschten Höhe der Schlagwirkung abhängig. Durch einvulkanisierte Gewichte kann die Hammerwirkung bei der Dehnungsbeschleunigung die Reinigungswirkung des Dehnungsschlauches erhöhen (Erhöhung des Initialimpulses).

Zur Erhöhung der Dehnungsamplitude kann es zweckmäßig sein, den Dehnungsschlauch im ruhenden Zustand, d. h. außerhalb der Abreinigungszyklen, unter Unterdruck zu halten. Dadurch vergrößert sich gleichzeitig der Ringraum als Abströmquerschnitt für das abgereinigte Gas.

Bei gasdichtem Dehnungsschlauch kann die unverschmutzte Druckluft nach der Expansion sehr schnell, z.B. über die Saugseite eines Druckluftverdichters, zurückgesaugt werden. Hierdurch wird ähnlich wie beim Gegenstromfilter, jedoch wesentlich intensiver, der konvexen Auswölbung des Filterschlauches eine konkave unmittelbar nachgeschaltet, wodurch sich eine besonders intensive Abreinigung ergibt.

Die Vorteile der Erfindung bestehen in einer weitestgehenden Anpassung der Abreinigungsbedingungen an das theoretisch mögliche Optimum zur Vermeidung erneuter und die Leistung des Filters mindernden Staubabscheidungen bei gleichzeitig größtmöglicher Schonung des Schlauchmaterials. Ferner entfällt die bisherige Begrenzung der Filterschlauchlängen gegenüber den Jet-Filtern.

## Patentansprüche

1. Einrichtung zur Abreinigung eines Filterschlauches (2), der innerhalb eines Roh- und Reingasabschnitte (13, 14) aufweisenden Filtergehäuses (1) einseitig geschlosssn auf einem Stützgitter (2a) angeordnet ist, und der zur Reingasseite hin offen ist, während seine Außenseite in den Rohgasabschnitt hineinragt und auf der Reingasseite einen in das Innere des Filterschlauches gerichteten Injektor (10) aufweist, der mit einer Gasquelle (8) höheren Druckes als dem des zu filternden Mediums verbunden ist,
dadurch gekennzeichnet,
daß auf der Reingasseite (14) des Stützgitters (2a), also innerhalb des Filterschlauches und des Stützgitters, ein durch Gasdruck ausdehnbarer Schlauch (3) angeordnet ist, der Schlauch (3) mit dem Injektor (10) druckdicht verbunden ist, und der Schlauch (3) so dimensioniert ist, daß der Umfang des nicht ausgedehnten Schlauches höchstens dem Innenumfang des Stützgitters (2a) entspricht, wobei der Abstand des Schlauches (3) vom Filterschlauch (2) in Abhängigkeit von mittels des Injektors (10) und der Gasquelle (8) erzeugbaren Druckes sowie der Dehnbarkeit des Schlauches (3) so gewählt ist, daß der Umfang des ausgedehnten Schlauches (3) bei Druckbeaufschlagung geringfügig größer ist also der Außen des Filterschlauches (2).

2. Einrichtung nach Anspruch 1,
dadurch gekennzeichnet,
daß auf dem Schlauch (3) verteilte Gewichte (12) befestigt sind,

3. Einrichtung nach Anspruch 1,
dadurch gekennzeichnet,
daß der Schlauch (3) aus eine dehnbaren, elastischen Material besteht.

4. Einrichtung nach einem der Ansprüche 1 bis 3,
dadurch gekennzeichnet,
daß der Schlauch (3) in Grenzen permeabel ausgebildet ist.

5. Einrichtung nach einem der Ansprüche 1 bis 4,
dadurch gekennzeichnet,
daß die den Druck und den Unterdruck erzeugende Einrichtung von einer Kolben-Zylinder-Einheit gebildet ist.

## Claims

1. Device for cleaning a filter hose (2) which is disposed closed on one side on a supporting grille (2a) inside a filter housing (1) exhibiting untreated and cleaned gas sections (13, 14) and which is open to the cleaned gas side while its outside extends into the untreated gas section and on the cleaned gas side exhibits an injector (10) which points into the interior of the filter hose and is connected with a gas source (8) at a higher pressure than that of the medium to be filtered, characterised in that a hose (3) dilatable by gas pressure is disposed on the cleaned gas side (14) of the supporting grille (2a), i.e. inside the filter hose and the supporting grille, in that the hose (3) is connected to the injector (10) in a pressuretight manner, and in that the hose (3) is dimensioned so that the circumference of the undilated hose is at most equal to the internal circumference of the supporting grille (2a), the distance of the hose (3) from the filter hose (2) being selected according to the pressure which can be produced by means of the injector (10) and the gas source (8) and the dilatability of the hose (3) so that the circumference of the dilated hose (3) when pressurised is slightly greater than the external circumference of the filter hose (2).

2. Device according to claim 1, characterised in that weights (12) are fixed distributed on the hose (3).

3. Device according to claim 1, characterised in that the hose (3) is made of a dilatable elastic material.

4. Device according to one of claims 1 to 3, characterised in that the hose (3) is made permeable within limits.

5. Device according to one of claims 1 to 4, characterised in that the device producing the pressure and the vacuum is formed by a piston and cylinder unit.

## Revendications

1. Dispositif pour nettoyer un tuyau filtrant (2), qui est agencé à l'intérieur d'un carter de filtre (1) présentant des tronçons de gaz brut et de gaz purifié (13,14), en étant fermé d'un côté par une grille de support (2a), et qui est ouvert du côté du gaz purifié, tandis que sa face externe pénètre dans le tronçon de gaz brut, et qui présente, du côté du gaz purifié, un injecteur (10) orienté vers l'intérieur du tuyau filtrant, qui est relié à une source de gaz (8) de pression plus élevée que celle du fluide à filtrer,
caractérisé en ce que, du côté du gaz purifié (14) de la grille de support (2a), c'est-à-dire à l'intérieur du tuyau filtrant et de la grille de support, il est agencé un tuyau (3) pouvant être dilaté par la pression de gaz, le tuyau (3) est relié de façon étanche à la pression à l'injecteur (10), et le tuyau (3) est dimensionné de sorte que la périphérie du tuyau non dilaté correspond au plus à la périphérie interne de la grille de support (2a), la distance du tuyau (3) du tuyau filtrant (2) étant choisie en fonction de la pression pouvant être engendrée au moyen de l'injecteur (10) et de la source de gaz (8), ainsi que de la capacité d'expansion du tuyau (3), de sorte que la périphérie du tuyau dilaté (3), lorsque de la pression est fournie, est légèrement plus grande que la périphérie externe du tuyau filtrant (2).

2. Dispositif selon la revendication 1,
caractérisé en ce que des poids (12) sont fixés de façon répartie sur le tuyau (3).

3. Dispositif selon la revendication 1,
caractérisé en ce que le tuyau (3) est constitué d'une matière élastique expansible.

4. Dispositif selon l'une des revendications 1 à 3,
caractérisé en ce que le tuyau (3) est réalisé de façon perméable dans certaines limites.

5. Dispositif selon l'une des revendications 1 à 4,
caractérisé en ce que le dispositif engendrant la pression et la dépression est formé par un vérin.
